# EUROPEAN PATENT APPLICATION

(11) **EP 3 841 867 A1**
(43) Date of publication of application: **30.06.2021**
(21) Application number: 20189579.4
(22) Date of filing: 05.08.2020
(51) Int. Cl.: A01F 15/08, A01B 69/04

(54) **SYSTEM AND METHOD FOR WINDROW PATH PLANNING**

(30) Priority: 27.12.2019 GB 201919381
(71) Applicant: AGCO International GmbH, 8212 Neuhausen am Rheinfall (CH)
(72) Inventor: ZHOU, Kun, 8930 Randers (DK)
(74) Representative: AGCO Intellectual Property Department

(57) **Abstract**

A system includes a tractor with an automated guidance system and one or more computing devices. The one or more computing devices are configured to receive image data, the image data including a graphic depiction of an agricultural area including windrows of agricultural material within the agricultural area, determine geographic locations of the plurality of windrows of agricultural material in the agricultural area from the image data, and use the locations of the plurality of windrows of agricultural material to define one or more guidance paths for an agricultural operation to be performed on the windrows of the agricultural material. The automated guidance system of the tractor is configured to steer the tractor to follow the one or more guidance paths.

## Description

### FIELD

Embodiments of the present invention relate to automated guidance for machines used in the agricultural industry. In particular, embodiments of the present invention relate to automated guidance path planning for baling operations using the locations of windrows of agricultural material.

### BACKGROUND

It is common in the agriculture industry for agricultural material to be grown in fields and, when ready to be harvested, cut and collected from the fields and formed into bales to facilitate handling and storage. Prior to a baling operation the agricultural material is typically placed or heaped into linear piles called "windrows," to enable or facilitate a baling machine to collect the agricultural material from the ground and form it into bales. A hay crop such as brome or alfalfa, for example, is cut by a windrower or similar machine and left on the ground to dry in preparation for baling. The hay may be placed into windrows by the windrower at the time of cutting or may later be raked into windrows as part of a separate operation. The hay may be placed into windrows at the time of cutting to dry, and then multiple windrows may later be raked together to form a single, larger windrow. Once the hay is dried and placed into windrows it is baled using, for example, a baler pulled by a tractor.

Crop material left from a harvesting operation may also be collected and formed into bales to facilitate storage and handling. When a combine harvester harvests wheat, for example, the harvester cuts the wheat from the field and gathers it into a portion of the harvester where the grain is separate from the rest of the plant, including straw. The straw is discarded from the rear of the machine onto the field. The straw may be scattered behind the combine harvester or may be dropped in a pile forming a windrow behind the harvester. If the straw is to be baled in a later baling operation, it may be particularly helpful to place the straw in a windrow behind the combine harvester.

Once the agricultural material is ready to be baled a baler pulled by a tractor is used to form the agricultural material into bales. Different baling machines form bales of different sizes and shapes, including rectangular and round bales of varying sizes and densities. These baling machines collect the agricultural material from the ground, form the agricultural material into round or rectangular bales, tie the bales using twine, wire or similar material and ultimately deposit the bales on the ground. The bales are then collected in a another operation and loaded onto a trailer for transport or stacked in another location.

The above section provides background information related to the present disclosure which is not necessarily prior art.

### SUMMARY

A system in accordance with an embodiment of the present invention comprises a tractor including a chassis, a plurality of ground-engaging elements supporting the chassis on a ground surface, a propulsion system for driving at least one of the ground-engaging elements to propel the tractor along the ground surface, and an automated guidance system. The automated guidance system comprises a location determining component for determining a geographic location of the tractor, one or more steering actuators for steering the tractor, and a controller for using location information from the location determining component and guidance path information to control the one or more steering actuators to automatically steer the tractor to follow a guidance path.

The system further comprises one or more computing devices for receiving image data, the image data including a graphic depiction of an agricultural area including windrows of agricultural material within the agricultural area, determining geographic locations of the plurality of windrows of agricultural material in the agricultural area from the image data, and using the locations of the plurality of windrows of agricultural material, defining one or more guidance paths for an agricultural operation to be performed on the windrows of the agricultural material.

The controller of the automated guidance system is configured to use the location information from the location determining component and the one or more guidance paths for the agricultural operation generated by the one or more computing devices to automatically steer the tractor to follow the one or more guidance paths for the agricultural operation.

In some embodiments of the invention, the one or more computing devices are further configured to identify a first group of windrows in a headland portion of the agricultural area, identify a second group of windrows in a non-headland portion of the agricultural area, and use only the location information of the windrows that are in the non-headland portion of the agricultural area to define the one or more guidance paths for the agricultural operation.

In some embodiments of the invention, the one or more guidance paths are defined to optimize the baling operation. The one or more guidance paths may be defined to optimize the baling operation by minimizing a baling time of the baling operation, by minimizing a travel distance of the baling operation, or both.

In some embodiments of the invention, the system further comprises an unmanned aerial vehicle including a camera, wherein the unmanned aerial vehicle is configured to fly over the agricultural area and use the camera to generate the image data used by the one or more computing devices to determine the geographic locations of the plurality of windrows of agricultural material in the agricultural area. The one or more computing devices may be configured to combine two or more of the images captured by the camera to generate the image data.

In some embodiments of the invention, the system further comprises a harvester configured to harvest a crop in the agricultural area and to create the windrows of agricultural material within the agricultural area. The harvester may include a location determining component for determining a geographic location of the harvester, a camera for capturing a plurality of images of the agricultural area within the vicinity of the harvester as the harvester travels through the agricultural area during a harvesting operation, and a controller. The controller is configured to use geographic location information from the location determining component of the harvester to assign geographic locations to one or more of the plurality of images captured by the camera, and combine two or more of the images captured by the camera to create the image data used by the one or more computing devices.

A method in accordance with another embodiment of the invention comprises creating image data, the image data including an image of an agricultural area, the image including graphical representations of a plurality of windrows of agricultural material located within the agricultural area; determining geographic locations of the plurality of windrows of agricultural material in the agricultural area from the image data; defining one or more travel paths for a baling operation to bale the windrows of the agricultural material using the locations of the plurality of windrows of agricultural material; and automatically steering a tractor during the baling operation to follow the one or more travel paths.

These and other important aspects of the present invention are described more fully in the detailed description below. The invention is not limited to the particular methods and systems described herein. Other embodiments may be used and/or changes to the described embodiments may be made without departing from the scope of the claims that follow the detailed description.

### DRAWINGS

Embodiments of the present invention are described in detail below with reference to the attached drawing figures, wherein:
Fig. 1 is a block diagram of a system constructed in accordance with an embodiment of the invention and including a tractor, a baler and one or more computing devices.
Fig. 2 is a block diagram of a communications and control system associated with the tractor of Fig. 1.
Fig. 3 is a flow diagram of a process for defining guidance paths for an agricultural operation to be performed on one or more windrows of agricultural material.
Figs. 4 and 5 illustrate a combine harvester harvesting a crop in an agricultural area and leaving crop residue in a windrow behind the harvester.
Fig. 6 illustrates geographic locations of the harvester as determined by a location determining component on board the harvester, the geographic locations corresponding to the harvester as it harvests in the locations depicted in Figs. 4 and 5.
Fig. 7 illustrates the combine harvester harvesting additional crop in the agricultural area.
Fig. 8 illustrates geographic locations of the harvester as determined by a location determining component on board the combine harvester.
Fig. 9 illustrates a travel path followed by the combine harvester as it completed the portion of the harvest operation depicted in Figs. 4, 5 and 7, the travel path determined using the geographic locations depicted in Fig. 8.
Fig. 10 illustrates the agricultural area after the combine harvester completed a portion of the harvest operation corresponding to an outer portion of the agricultural area.
Fig. 11 illustrates a travel path followed by the combine harvester as it completed the portion of the harvest operation depicted in Fig. 10.
Fig. 12 illustrates the agricultural area after the harvest operation is complete.
Fig. 13 illustrates a travel path followed by the combine harvester as it completed the harvest operation depicted in Fig. 12, the travel path including end turns.
Fig. 14 illustrates the agricultural area divided into headland and non-headland portions.
Fig. 15 illustrates the travel path of Fig. 13, with portions of the travel path corresponding to previously-harvested portions of the agricultural area indicated by dashed lines.
Fig. 16 illustrates different travel paths followed by a tractor and an implement pulled by the tractor.
Fig. 17 is a tractor pulling a square baler, illustrating the square baler picking up agricultural material along a path that is offset from a travel path of the tractor.
Fig. 18 is self-propelled baling machine.
Fig. 19 is a flow diagram of a process for defining guidance paths for an agricultural operation to be performed on one or more windrows of agricultural material.
Fig. 20 illustrates windrows of agricultural material in the agricultural area, wherein portions of the windrows have been shifted.

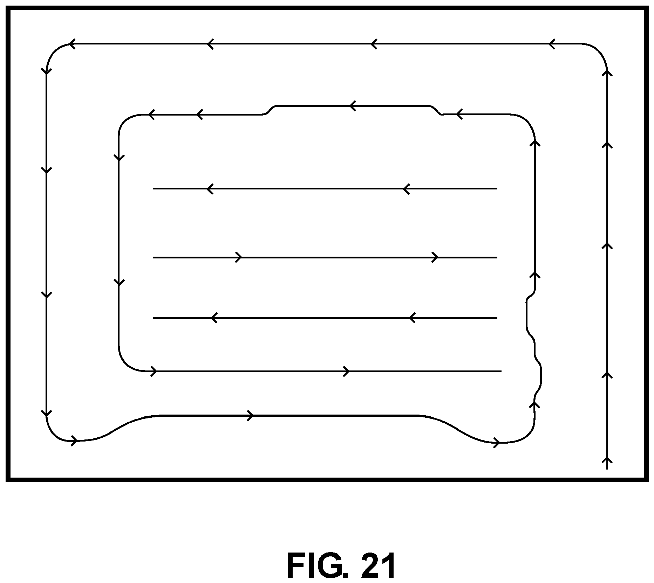

Fig. 21 illustrates guidance paths corresponding to the locations of the windrows of Fig. 20.

The drawing figures do not limit the present invention to the specific embodiments disclosed and described herein. The drawings are not necessarily to scale, emphasis instead being placed upon clearly illustrating the principles of the invention.

### DESCRIPTION

The following detailed description of embodiments of the invention references the accompanying drawings. The embodiments are intended to describe aspects of the invention in sufficient detail to enable those skilled in the art to practice the invention. Other embodiments can be utilized and changes can be made without departing from the spirit and scope of the invention as defined by the claims. The following description is, therefore, not to be taken in a limiting sense. Further, it will be appreciated that the claims are not necessarily limited to the particular embodiments set out in this description.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein.

When elements or components are referred to herein as being "connected" or "coupled," the elements or components may be directly connected or coupled together or one or more intervening elements or components may also be present. In contrast, when elements or components are referred to as being "directly connected" or "directly coupled," there are no intervening elements or components present.

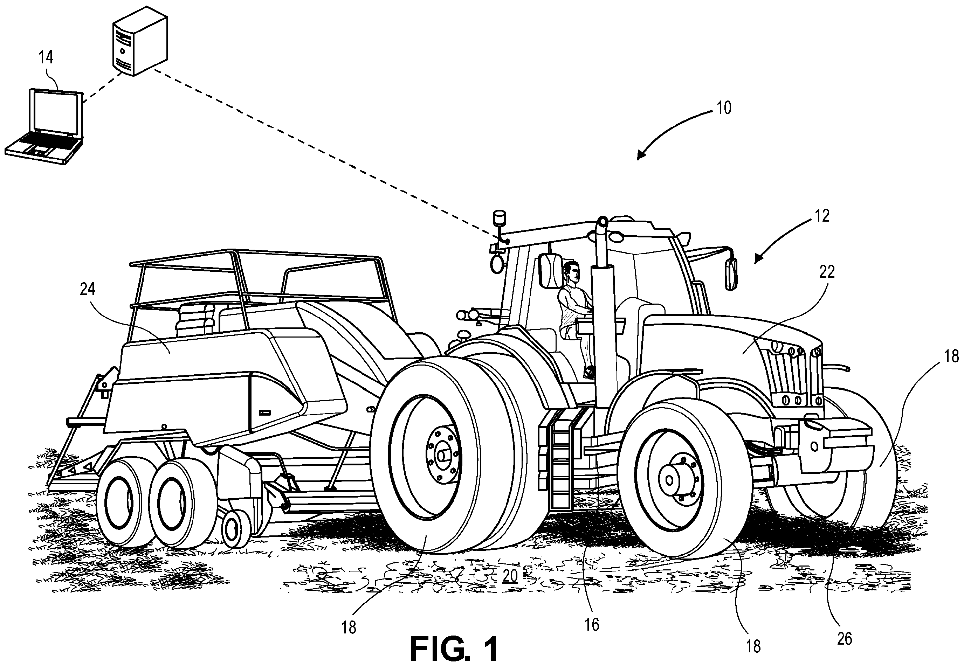

Turning now to the drawing figures, and initially Figs. 1-3, a system 10 constructed in accordance with an embodiment of the invention includes a tractor 12 and one or more computing devices 14. The tractor 12 broadly includes a chassis 16, a plurality of ground engaging elements 18 supporting the chassis on a ground surface 20, and a propulsion system 22 for driving at least one of the ground-engaging elements 18 to propel the tractor 12 along the ground surface 20. In this embodiment the ground-engaging elements 18 are wheels and the propulsion system 22 includes an internal combustion engine and a transmission for transferring power from the engine to one or more of the wheels to thereby propel the tractor 12 along the ground surface 20. The tractor 12 is coupled with a large square baler 24 such that, during operation, the tractor 12 pulls the baler 24 and drives operation of the baler 24 through a power take-off of the tractor 12. The baler 24 picks up a windrow 26 of agricultural material on the ground surface 20, forms bales of the agricultural material and places the formed bales on the ground surface 20.

The one or more computing devices 14 are located remotely and/or separately from the tractor 12 and may include one or more laptop or desktop computers or other computing devices such as tablet computers and smartphones. The one or more computing devices 14 may be in wireless communication with the tractor 12 via cellular or satellite communications networks or via local communications mediums such as Bluetooth or Wi-Fi. Alternatively, the one or more computing devices 14 may not be in direct communication with the tractor 12. Information generated by the one or more computing devices 14 may be stored on a USB drive or other portable storage device and accessed by the tractor 12 via an input/output port of a communications and control system of the tractor 12, as explained below.

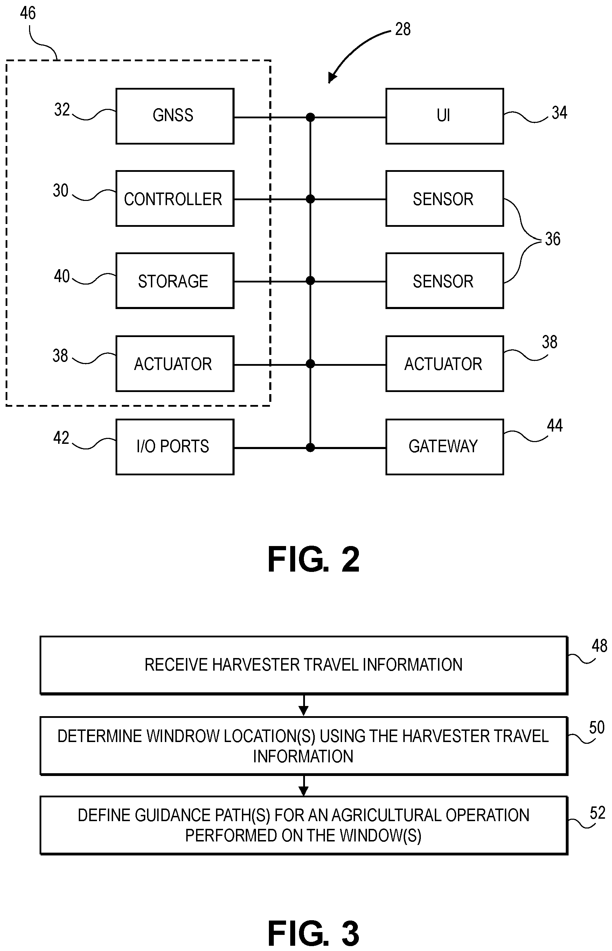

A communications and control system 28 of the tractor 12 is illustrated in Fig. 2. The system 28 broadly includes a controller 30, a position determining device 32, a user interface 34, one or more sensors 36, one or more actuators 38, one or more storage components 40, one or more input/out ports 42 and a communications gateway 44.

The position determining device 32 includes a global navigation satellite system (GNSS) receiver, such as a device configured to receive signals from one or more positioning systems such as the United States' global positioning system (GPS), the European GALILEO system and/or the Russian GLONASS system, and to determine a location of the machine using the received signals. The user interface 34 includes components for receiving information, instructions or other input from a user and may include buttons, switches, dials and microphones as well as components for presenting information or data to users, such as displays, light-emitting diodes, audio speakers and so forth. The user interface 34 may include one or more touchscreen displays capable of presenting visual representations of information or data and receiving instructions or input from the user via a single display surface.

The sensors 36 may be associated with any of various components or functions of the tractor 12 including, for example, various elements of the engine, transmission(s), and hydraulic and electrical systems. One or more of the sensors 36 may be configured and placed to detect environmental or ambient conditions in, around or near the tractor 12. Such environmental or ambient conditions may include temperature, humidity, wind speed and wind direction. The actuators 38 are configured and placed to drive certain functions of the tractor 12 including, for example, steering when an automated guidance function is engaged. The actuators 38 may take virtually any form but are generally configured to receive control signals or instructions from the controller 30 (or other component of the system) and to generate a mechanical movement or action in response to the control signals or instructions. By way of example, the sensors 36 and actuators 38 may be used in automated steering of a machine wherein the sensors 36 detect a current position or state of steered wheels or tracks and the actuators 38 drive steering action or operation of the wheels or tracks. In another example, the sensors 36 collect data relating to the operation of the machine and store the data in the storage component 40, communicate the data to a remote computing device via the communications gateway 44, or both.

The controller 30 includes one or more integrated circuits programmed or configured to implement the functions described herein. By way of example the controller 30 may be a digital controller and may include one or more general purpose microprocessors or microcontrollers, programmable logic devices, or application specific integrated circuits. The controller 30 may include multiple computing components placed in various different locations on the tractor 12. The controller 30 may also include one or more discrete and/or analog circuit components operating in conjunction with the one or more integrated circuits or computing components. Furthermore, the controller 30 may include or have access to one or more memory elements operable to store executable instructions, data, or both. The storage component 40 stores data and preferably includes a non-volatile storage medium such as optic, magnetic or solid state technology.

It will be appreciated that, for simplicity, certain elements and components of the system 28 have been omitted from the present discussion and from the drawing of FIG. 2. A power source or power connector is also associated with the system, for example, but is conventional in nature and, therefore, is not discussed herein.

In some embodiments, all of the components of the system 28 are contained on or in the tractor 12. The present invention is not so limited, however, and in other embodiments one or more components of the system 28 may be external to the tractor 12. In one embodiment, for example, some of the components of the system are contained on or in the tractor 12 while other components of the system are contained on or in an implement associated with the tractor 12, such as the baler 24. In that embodiment, the components associated with the tractor 12 and the components associated with the baler 24 may communicate via wired or wireless communications according to a local area network such as, for example, a controller area network. The system 28 may be part of a communications and control system conforming to the ISO 11783 (also referred to as "ISOBUS") standard. In yet another embodiment, one or more components of the system 28 may be located remotely from the tractor 12 and any implements associated with the tractor 12. In that embodiment, the system 28 may include wireless communications components (e.g., the gateway) for enabling the machine to communicate with a remote computer, computer network or system.

The tractor 12 includes an automated guidance system 46 or function operable to automatically guide the tractor 12 along predetermined guidance paths. The automated guidance system comprises components of the communications and control system 28 including the position determining device 32, the controller 30 (or a portion thereof), the storage component 40 and one or more of the actuators 38 for steering the tractor under the direction of the controller 30.

As explained above, the one or more computing devices 14 may be separate from the tractor 12 and in communication with the tractor 12 via a wireless communications protocol or, alternatively, may not be in direct communication with the tractor 12 at all. Alternatively, the one or more computing devices may be part of the communication and control system 28 of the tractor 12, such as where the one or more computing devices form part of the controller 30 and/or the functionality of the one or more computing devices 14 described herein is implemented by the controller 30. Thus, the particular location and implementation of the one or more computing devices 14 is not important. Implementations wherein the functionality of the one or more computing devices 14 described herein is implemented externally to the tractor 12, onboard the tractor 12, as part of the system 28 or separate therefrom are all within the ambit of the present invention.

The one or more computing devices 14 use harvester travel information to generate guidance paths for use by the tractor 12 to perform an agricultural operation on one or more windrows of agricultural material resulting from a harvesting operation performed by a harvester.

More particularly, the one or more computing devices 14 are configured to receive harvester travel information including the geographic locations of one or more travel paths followed by a harvester in an agricultural area during a harvesting operation, as depicted in block 48 of Fig. 3. The one or more computing devices 14 are further configured to determine the locations of a plurality of windrows of agricultural material in the agricultural area from the harvester travel information, as depicted in block 50. Determining the locations of the windrows includes assigning windrow locations to the one or more travel paths followed by the harvester only where the harvester was harvesting a crop. The one or more computing devices 14 use the locations of the plurality of windrows of agricultural material to define one or more guidance paths for an agricultural operation performed on the windrows of the agricultural material, as depicted in block 52.

One of the advantages of the present invention is that it defines guidance paths corresponding to the locations of existing windrows of agricultural material so that an operator of a tractor performing a baling operation (or other agricultural operation on the windrows of agricultural material) can use the tractor's automated guidance system during the baling operation. In many agricultural operations including tilling, planting and harvesting a machine operator uses pre-existing guidance paths or defines new guidance paths. Guidance paths in those operations may be arbitrarily defined within an agricultural area. In an agricultural operation performed on a windrow of agricultural material, in contrast, the operation is tied to the windrow such that machine must follow a path that is associated with the windrow-such as a path that corresponds exactly to the location of the windrow or a path that is proximate the windrow. In a baling operation such as that depicted in Fig. 1, the tractor 12 must pull the baler 24 such that the baler 24 follows the location of the windrow, such that the tractor follows a path that generally corresponds to the location of the windrow 26. In other agricultural operations performed on the windrow 26, such as raking, the tractor may follow a path that does not correspond exactly to the location of the windrow 26 but may be offset from the location of the windrow 26.

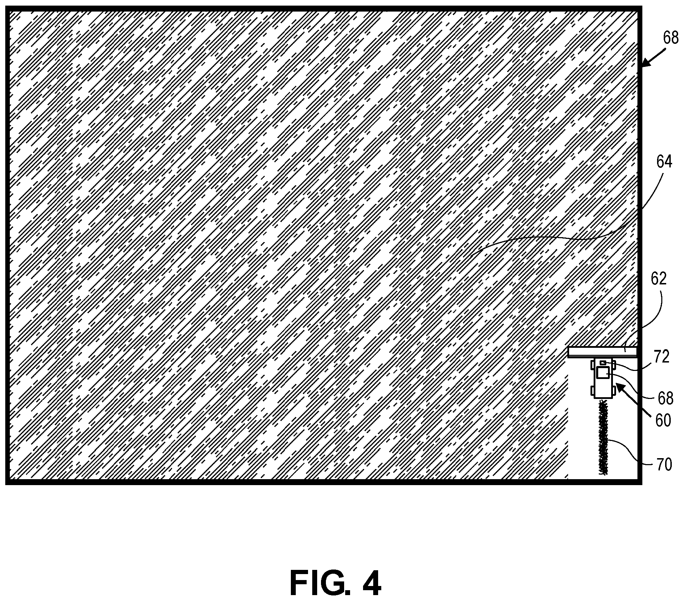

With reference now to Figs. 4-11, a process of collecting harvester travel information is illustrated. A combine harvester 60 includes a header 62 for cutting and gathering crop 64 as the harvester 60 moves through a field 66 or similar other agricultural area. The cut and gathered crop is fed into a crop processor in the harvester 60 where the crop is threshed and the grain is separated from material other than grain ("MOG") such as leaves and stalks. The grain is collected in a clean grain tank 68 while the MOG is discarded from the rear of the harvester as crop residue. Combine harvesters are typically configured to either scatter the crop residue at the rear of the combine or place the crop residue on the ground in windrows. If the residue is going to be baled in a subsequent agricultural operation it is common for the operator to configure the harvester to place the crop residue on the ground in windrows which can then be picked up by a baling machine and formed into bales, such as the tractor and baler combination illustrated in Fig. 1. In the embodiment illustrated in Figs. 4-11 the harvester 60 is placing the crop residue on the ground in a windrow 70 behind the harvester 60.

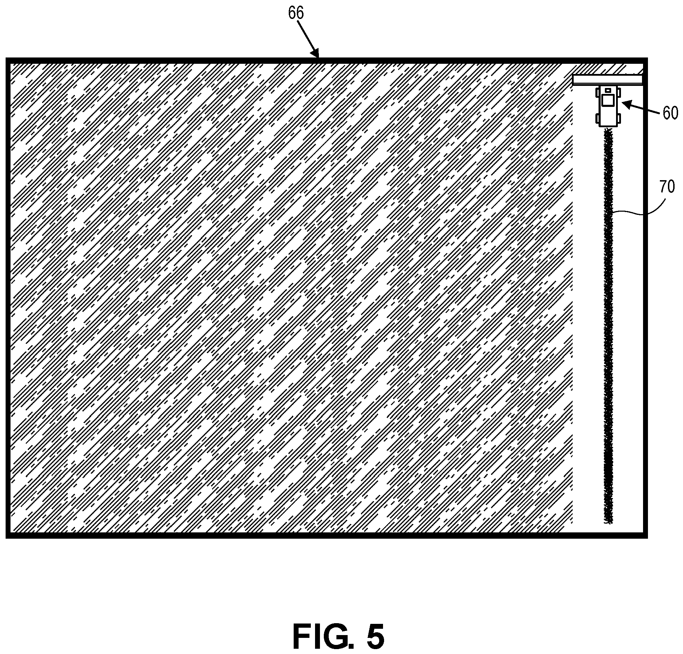

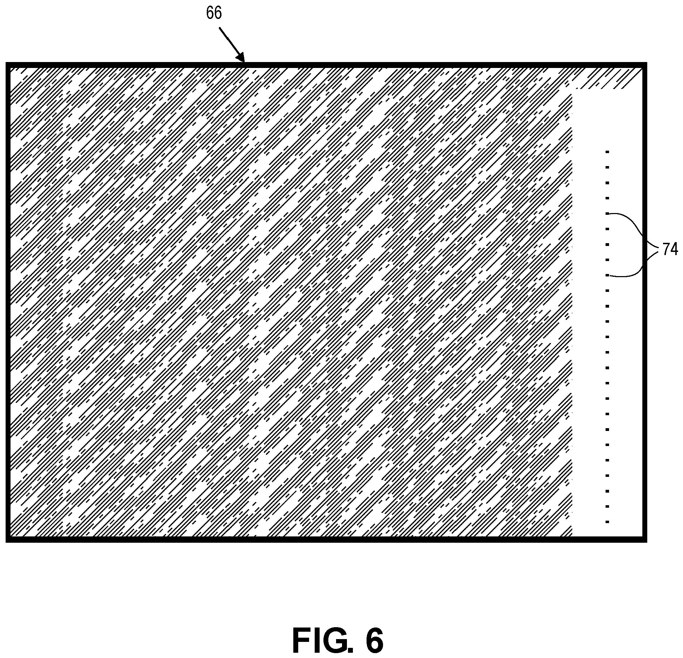

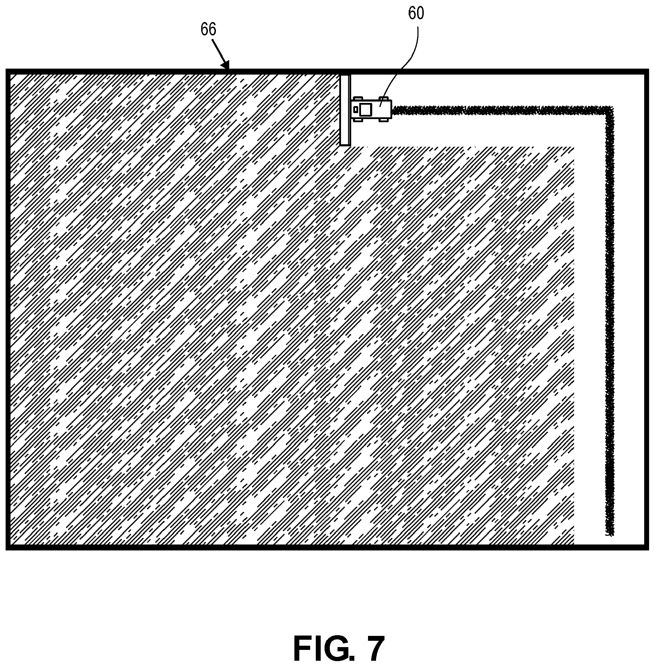

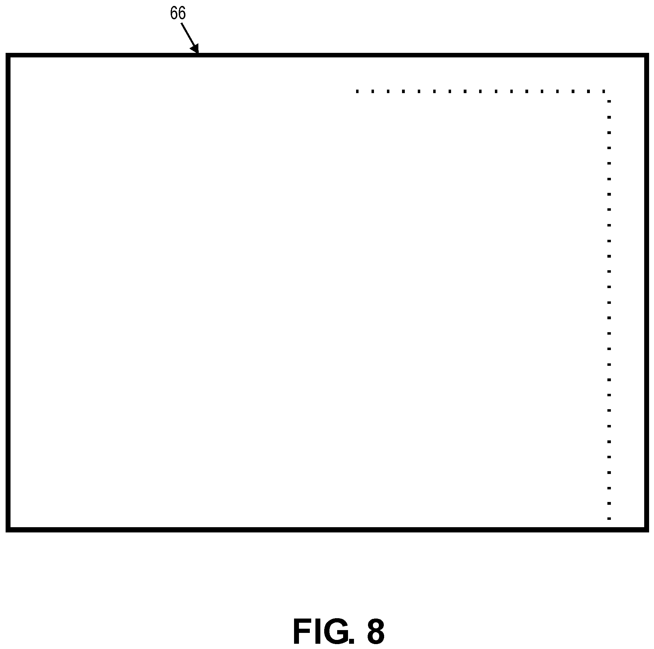

The combine harvester 60 includes an electronic communication and control system including components similar to those of the system 28, described above, including a position determining device 72 with a global navigation satellite system (GNSS) receiver. The harvester 60 is configured to record travel information as the harvester 60 travels through the field 66 during a harvesting operation. As illustrated in Figs. 4 and 5, the harvester 60 begins harvesting the field 66 along an outer portion thereof and leaving the windrow 70 of crop residue in the field behind the harvester 60. The harvester 60 uses the position determining device 72 to capture location information of the harvester 60 as it travels through the field 66, periodically capturing and storing the location of the harvester. The dots shown in Fig. 6 correspond to locations captured and stored by the harvester 60 as it travels through the field during the harvest operation. As the harvester 60 continues progressing through the field 66 it continues capturing and storing locations of the harvester, as illustrated in Fig. 7 and Fig. 8.

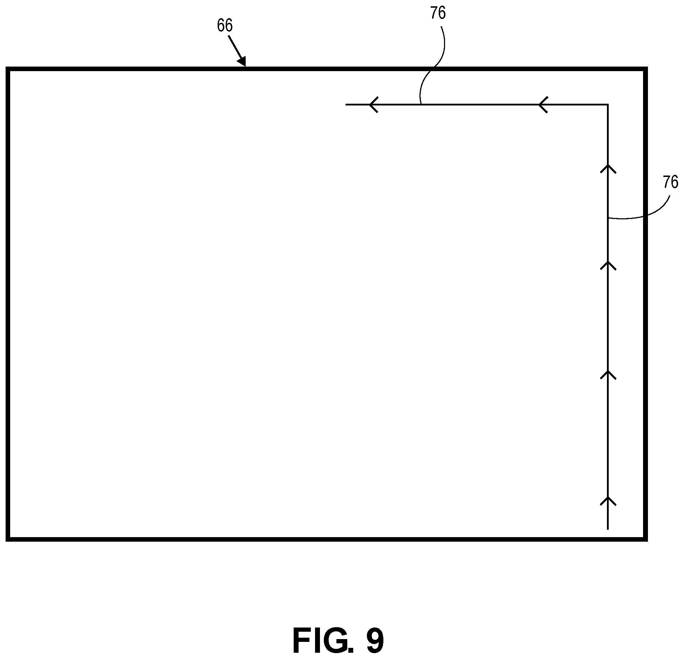

Each of the locations 74 has a time associated with it such that the locations 74 can be used to form a line or lines 76 corresponding to a travel path followed by the harvester including a direction of travel and order in which the paths were traveled by the harvester 60, as illustrated in Fig. 9. The arrows on the lines 76 indicate a direction of travel of the harvester 60 which is determined using the time associated with each location 74, wherein the harvester 60 travelled from locations 74 captured earlier in time toward locations 74 captured later in time.

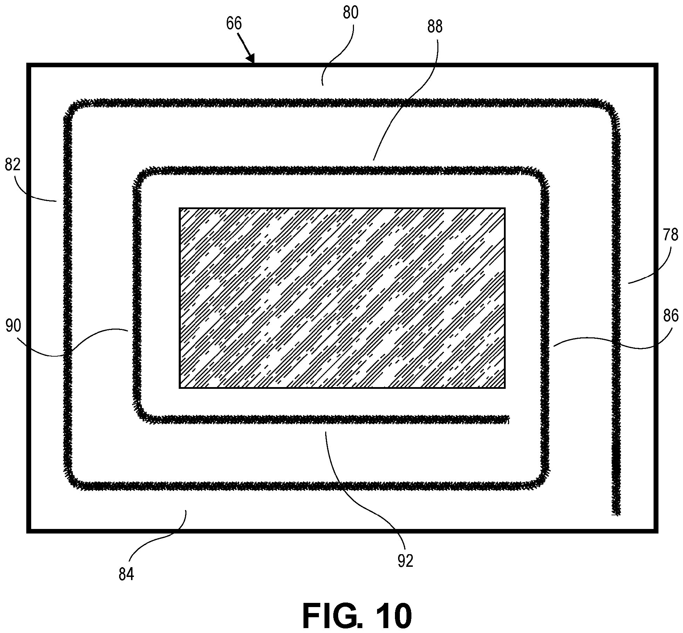

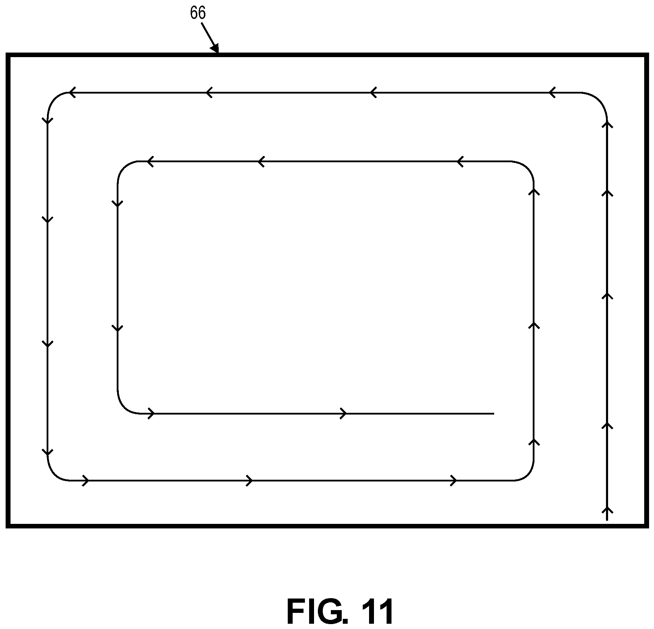

As the harvester 60 passes through the field and cuts and processes an area of crop referred to herein as a swath. The width of each swath cut by the harvester 60 corresponds to the width of the header 62. The area of cut crop in Fig. 5, for example, corresponds to one swath of the harvester 60. As illustrated in Fig. 10, the harvester 60 has completed two rounds around the outside of the field in the harvesting operation, beginning with an outermost swath 78 on the right side, then an outermost swath 80 on the top, then an outermost swath 82 on the left side, followed by an outermost swath 84 corresponding to the bottom of the figure, an inner swath 86 on the right side adjacent the outer swath 78 on the right side, followed by swaths 88, 90 and 92. As illustrated in Fig. 11, the harvester records the geographic locations of the paths it follows through the field harvesting the swaths of crop. The arrows indicate the direction of travel of each path and the harvester records the order in which the harvester traversed the paths using times associated with the capture geographic locations, as described above.

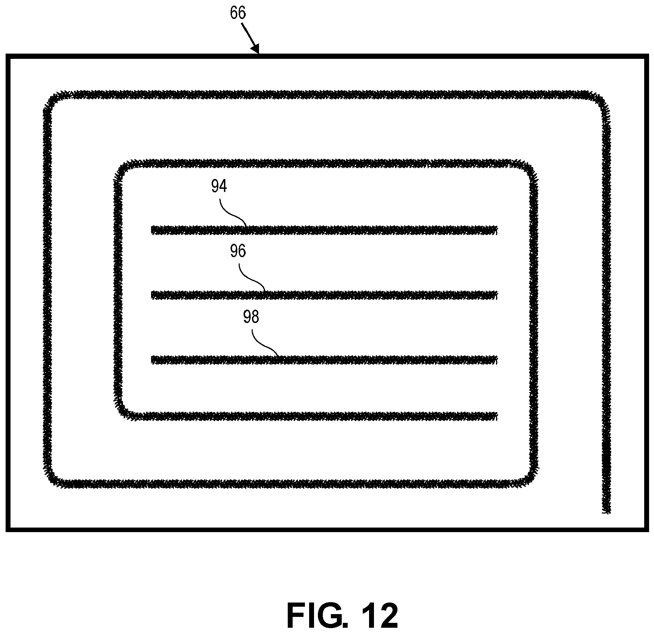

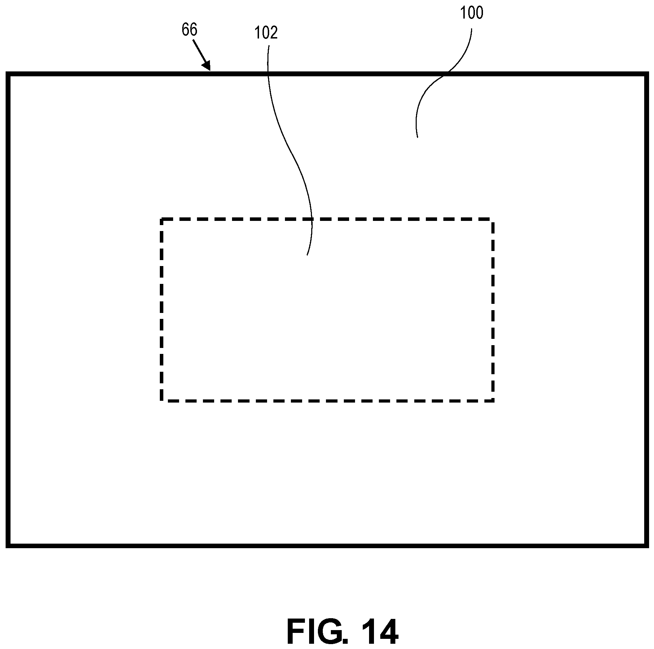

After completing the two rounds around the outside of the field the harvester makes passes back and forth in the portion of the field that remains unharvested, leaving three windrows 94, 96 and 98 of agricultural material in the middle of the field 66 as illustrated in Fig. 12. The portion of the field 66 corresponding to the two rounds around the outside of the field is referred to herein as a headland and is used by the operator to turn the harvester 60 as it makes the passes back and forth through the non-headland or central area of the field 66. Figure 14 illustrates the locations of the headland 100 and non-headland 102 portions of the field 66.

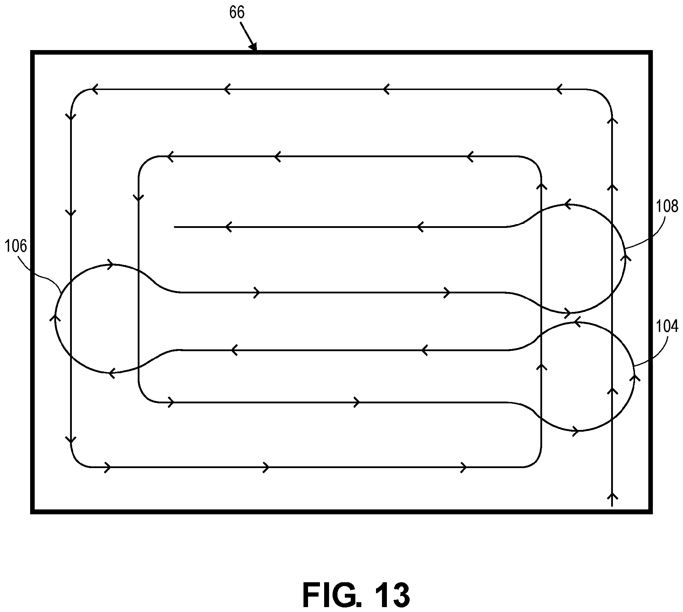

The harvester 60 records the travel path followed by the harvester 60 during the harvesting operation, as explained above, resulting in the travel paths illustrated in Fig. 13. These travel paths correspond to the path travelled by the harvester 60 as it first made two passes around the outside (headland) portion of the field then the back-and-forth passes through the non-headland portion of the field. The travel paths include turns 104, 106 and 108 the harvester 60 made in the headland at each end of the field as it completed one back-and-forth pass and began another. While the turns 104, 106, 108 form part of the travel paths as the combine harvester 60 harvested the field, there are no windrows of agricultural material corresponding to the turns because there was no crop material to be harvested in those locations when the harvester 60 made the turns. In other words, when making the turns the harvester 60 was passing through an area of the field that had previously been harvested. The turns 104, 106, 108 and other portions of the harvester's travel path(s) corresponding to areas of the field 66 where no crop was harvested do not generate a windrow of agricultural material and, therefore, are ignored by the one or more computing devices 14 as not corresponding to a windrow of agricultural material.

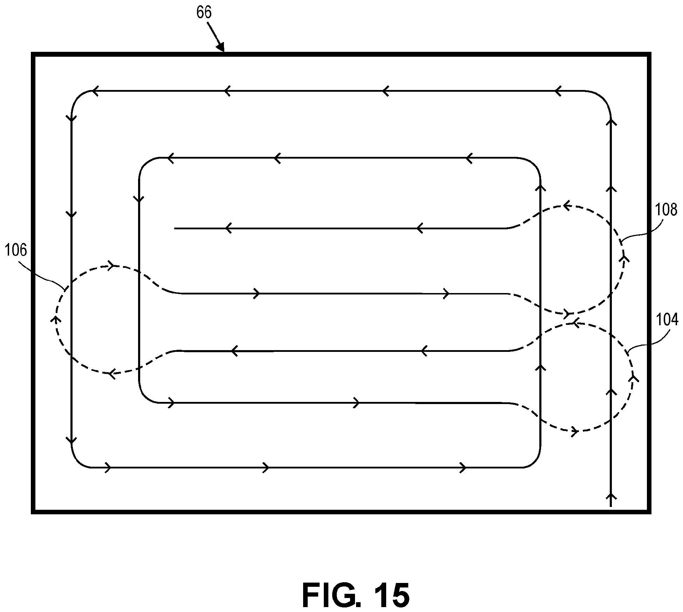

The one or more computing devices 14 determine which portions of the travel path or paths correspond to a previously harvested portion of the field using the swath width of the harvester 60 and the order in which the harvester 60 followed the travel paths. The swath width is the width of the area cut by the harvester 60 and corresponds to the width of the header 62, as illustrated in Fig. 7 and explained above. By applying the swath width to the travel paths of the harvester 60 in the order the harvester 60 followed the travel paths it can be determined which areas of the field have been harvested and, therefore, which portions of the travel path(s) correspond to areas of the field that have already been harvested. Using this method it is determined that after completing the two rounds around the outside of the field 66 the area corresponding to the headland portion 100 of the field 66 is harvested and the non-headland portion 102 of the field is not harvested. Thus, the turns 104, 106, 108 may be disregarded because they are in the headland portion 100 of the field 66. This is illustrated in Fig. 15 where the turns 104, 106, 108 are depicted in dashed lines to indicate that they correspond to a previously-harvested portion of the field 66 and, therefore, did not result in any new windrows of agricultural material.

The guidance paths determined by the one or more computing devices 14 for use by the tractor 12 may correspond to the locations of the travel paths where the travel paths correspond to areas not previously harvested. In Fig. 15, for example, the travel paths recorded by the harvester 60 correspond to the location of the windrows of agricultural material, therefore the travel paths as recorded by the harvester 60 are used by the tractor's guidance system 46 to guide the tractor 12 during the agricultural operation performed on the windrows of agricultural material.

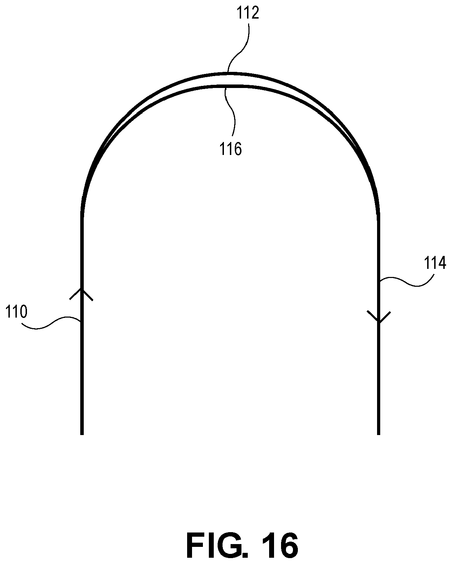

The guidance paths may not correspond precisely with the locations of the travel paths. If the guidance paths are created for an agricultural operation involving a tractor pulling an implement, such as the tractor 12 pulling the baler 24 illustrated in Fig. 1, the guidance paths may be determined such that the tractor follows the guidance path and the location of the implement corresponds to the location of the windrow 26 of agricultural material. In other words, the path followed by the tractor 12 may not be the same as the path followed by the implement. An example of this is illustrated in Fig. 16 where the tractor 12 pulling the baler 24 completes a first straight travel segment 110, makes a turn 112, then begins a second straight travel segment 114. On each of the straight travel segments 110, 114 the baler 24 follows the same path as the tractor 12. On the curved or turn segment 112, though, the tractor follows a first path 112 while the baler 24 follows a second path 116 slightly offset from the tractor's path 112. It is common for trailed implements to follow a slightly different path than the tractor on curves. If the trailed implement is a baler and the difference in travel path locations is not compensated for, the difference may result in misalignment of the baler with a windrow of agricultural material such that some agricultural material is not picked up by the baler. Thus, it may be desirable to adjust the location of the guidance path followed by the tractor so that as the tractor follows the guidance path the trailed implement follows a path corresponding to the location of the windrow, thereby preventing misalignment of the implement and the windrow. This may be done by adjusting the radius of curvature of a curved section of windrow so that the tractor follows a path presenting a larger radius of curvature than the curved portion of the windrow, which would cause the tractor to follow a path slightly to the outside of the windrow and the baler to follow the windrow.

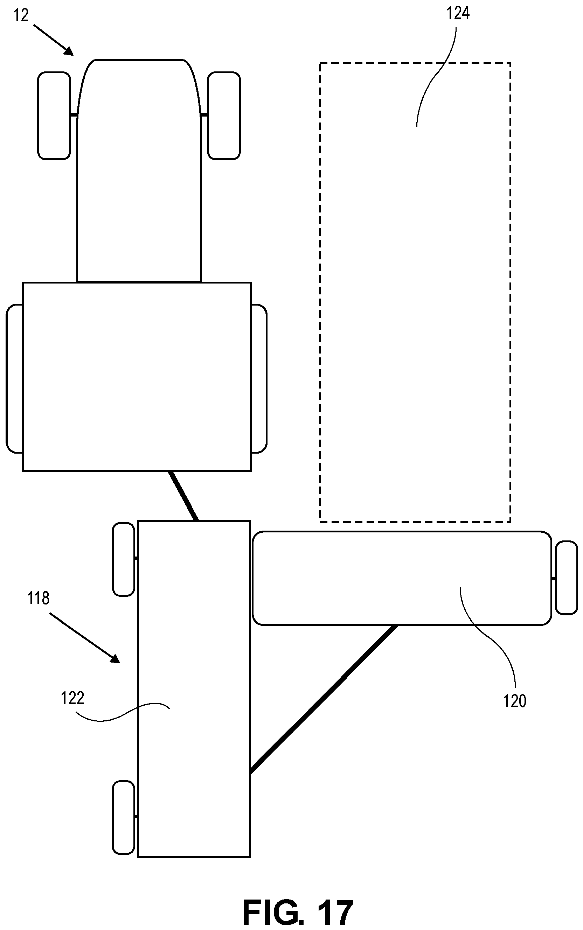

Some implements may be offset laterally from the tractor, such as a small square baler 118 as illustrated in Fig. 17. The small square baler 118 includes a pickup portion 120 extending laterally relative to a direction of travel of the baler 118 for collecting agricultural material from a ground surface. An auger or other mechanism moves picked up agricultural material into a bale forming portion 122 where a plunger compresses the material into bales that are tied off with twine or wire and pushed through a chute and out a rear of the baler 118 to be deposited on the ground or transferred to a collection device. This type of baler is pulled by the tractor 12 and is attached to the tractor in an offset configuration so that the tractor drives along a path that is adjacent to the windrow 124 of agricultural material while the pickup portion 120 of the baler 118 follows the windrow 124. Another type of implement that may be coupled with and laterally offset from a tractor is a rake. In those situations the guidance path may be laterally offset from the location of the windrow.

The one or more computing devices 14 use information about the implement to determine where the guidance path ought to be located relative to the windrow, whether its location should correspond to the windrow or should be offset from the windrow. Each implement will present different characteristics, such as geometry, and may follow a different path relative to the tractor. The implement characteristics may be determined and provided by the implement manufacturer and used by the one or more computing devices 14 to determine the path of the implement relative to the tractor.

In another embodiment of the invention, the one or more computing devices 14 may also determine which portions of the travel path or paths correspond to a previously harvested portion of the field using operating characteristics of the harvester 60. Sensors located in the header 62 or the processer of the harvester 60 are used to determine when the harvester 60 is cutting or processing crop. Sensors located on the header 62, for example, may detect the presence or flow of agricultural material in the header 62; sensors located in the processor may detect the presence or flow of agricultural material being processed; sensors located near a discharge area of harvester 60 may detect the presence of agricultural material being discharged from the harvester. Similarly, machine state may be used to determine whether the harvester 60 is harvesting. The header in a lowered position, for example, may indicate that the harvester is harvesting crop while the header in a raised position may indicate that the harvester 60 is not harvesting crop. Using any of these techniques, each portion of each of the travel paths is associated with a harvesting or non-harvesting state of the harvester 60. Using that information the one or more computing devices 14 determines which travel paths correspond to windrows of agricultural material.

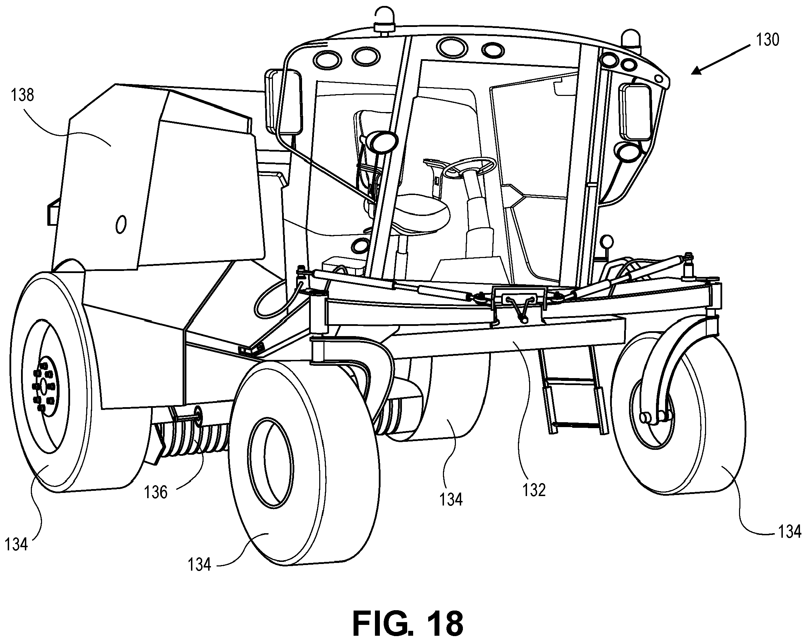

In some embodiments of the invention the tractor may not be coupled with an implement at all. According to another embodiment of the invention the tractor is a self-propelled baling machine 130 as illustrated in Fig. 18. The tractor 130 broadly includes a chassis 132, a plurality of ground engaging elements 134 supporting the chassis 132 on a ground surface, and a propulsion system for driving at least one of the ground-engaging elements to propel the tractor along the ground surface. In this embodiment the ground-engaging elements 134 are wheels and the propulsion system includes an internal combustion engine and a transmission for transferring power from the engine to one or more of the wheels to thereby propel the tractor along the ground surface. The tractor 130 further includes a baling system including a pickup 136 for collecting agricultural material off the ground and a baling chamber 138 for forming the collected agricultural material into bales. As used herein, tractor means a tractor 12 configured to pull an implement, as illustrated in Fig. 1, as well as a self-propelled baling tractor 130 as illustrated in Fig. 18.

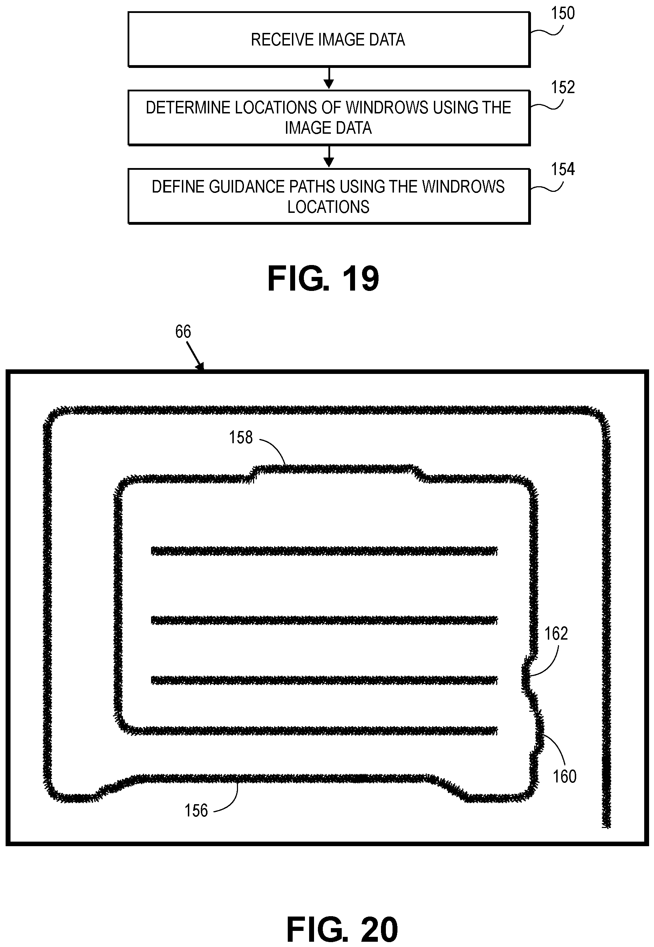

In another embodiment of the invention the one or more computing devices 14 use an image of an agricultural area with windrows therein to generate the guidance paths used by a tractor to perform an agricultural operation on the windrows. This embodiment of the invention is similar to the system 10 describe above, except that rather than using harvester travel information to determine the location of the windrows, the one or more computing devices 14 use one or more images of the agricultural area with the windrows to determine the locations of the windrows. More particularly, the one or more computing devices implement a method comprising receiving image data, the image data including a graphic depiction of an agricultural area including windrows of agricultural material within the agricultural area, as depicted in block 150 of Fig. 19; determining geographic locations of the plurality of windrows of agricultural material in the agricultural area from the image data, as depicted in block 152; and using the locations of the plurality of windrows of agricultural material, defining one or more guidance paths for an agricultural operation to be performed on the windrows of the agricultural material, as depicted in block 154.

This embodiment has the advantage of being able to determine the locations of the windrows even when the locations have shifted since the windrows were first created by the harvester. Windrows of agricultural material may move if for example, they are blow by heavy winds or an agricultural machine operating in the area drives on or near the windrows and pushes them out of their original location. To illustrate, the field 66 is illustrated in Fig. 20 with the same windrows of agricultural material as described above and illustrated in Fig. 12 except that some of the windrows have shifted relative to their original locations. In locations 156 and 158 portions of the windrows shifted as a result of heavy winds, while in locations 160 and 162 portions of the windrows shifted as a result of the harvester driving over the windrows and push them out of their original location. In this scenario, using the original locations of the windrows to generate guidance paths would result in some of the guidance paths not corresponding to the locations of the windrows. The present embodiment of the invention solves this problem by using one or more images of the field 66 to determine the locations of the windrows.

The images may be aerial images captured by an unmanned aerial vehicle, an airplane or a satellite. Alternatively, the images may be images captured by a land vehicle passing through the field and using an onboard camera to capture images of the ground and a controller to stitch the images together to form a single image of the entire field. The combine harvester 60, for example, may include a camera mounted thereon to capture images of the ground surface behind the harvester which would include the windrows of agricultural material generated by the harvester 60. Using location information generated by the location determining device on the harvester 60, the harvester 60 associates each image with a geographic location.

If the images are aerial images the one or more computing devices 14 identify the windrows in the image and then associate the windrows with geographic locations. The devices 14 may identify the windrows in the image by identifying patterns, colors or both in the image. Windrows of agricultural material may present a different color than the surrounding ground surface. Similarly, the devices 14 may scan the image for patterns such as edges which correspond to the edges of the windrows. Using these or other image processing techniques the devices 14 identify windrows within the images.

Once the windrows are identified within the image the devices 14 determine the geographic locations of the windrows. If the images are aerial images this can be done using the geographic location (including altitude) and orientation of the camera when the image was captured and characteristics of the camera. Using this approach the geographic location and the size of the area within the image is determined, and with that information the geographic location of each pixel in the image can be determined. By identifying the windrows within the image and the geographic locations of the image pixels, a geographic location can be associated with each windrow. The devices 14 may define the location of a windrow as a string of pixels corresponding to the center of each windrow. Once the locations of the windrows are determined from the images the devices 14 may determine guidance paths associated with the windrows as explained above.

In an embodiment of the invention the one or more computing devices 14 are programmed or configured to automatically distinguish between a headland and a non-headland portion of the agricultural area and only generate guidance paths for the non-headland portion. With reference to Fig. 15, the travel paths in the headland portion of the field 66 form a spiral pattern while the travels paths in the non-headland portion form a pattern of straight, parallel paths. In this embodiment of the invention, the one or more computing devices 14 are configured to distinguish between the spiral pattern and the pattern of straight, parallel paths and only use the straight, parallel paths to generate the guidance paths. This may be desirable where the operator desires to manually guide the machine to bale the headland portions of the and desires to use automated guidance to bale the non-headland portions of the field. The one or more computing devices 14 may be programmed or configured to distinguish the headland portion 100 of the field 66 from the non-headland portion 102 of the field 66 by treating all areas of the field 66 within a particular distance from the edge of the field 66 as the headland portion. Alternatively, the one or more computing devices 14 may be programmed or configured to distinguish the headland portion 100 from the non-headland portion 102 by designating or treating all travel paths (Fig. 15) that are connected in a spiral configuration as pertaining to the headland portion 100 and designating or treating all disconnected, parallel paths as pertaining to the non-headland portion 102.

In some embodiments of the invention, all of the components of the system are contained on or in a single host machine, such as the tractor. The present invention is not so limited, however, and in other embodiments one or more of the components of the system may be external to the host machine. In one embodiment, for example, some of the components of the system are contained on or in the tractor while other components of the system are contained on or in an implement associated with the host machine, such as the baler. In that embodiment, the components associated with the machine and the components associated with the implement may communicate via wired or wireless communications according to a local area network such as, for example, a controller area network. The system may be part of a communications and control system conforming to the ISO 11783 (also referred to as "ISOBUS") standard. In yet another embodiment, one or more components of the system may be located remotely from the machine and any implements associated with the machine. In that embodiment, the system may include wireless communications components (e.g., the gateway) for enabling the machine to communicate with a remote computer, computer network or system. It may be desirable, for example, to use one or more computing devices external to the machine to determine, or assist in determining, a preferred travel path for collecting a plurality of bales, as explained herein.

Although the invention has been described with reference to the preferred embodiment illustrated in the attached drawing figures, it is noted that equivalents may be employed and substitutions made herein without departing from the scope of the invention as recited in the claims. While the tractor 12 is illustrated and described herein as having wheels, the ground engaging elements 18 may also be tracks.

Having thus described the preferred embodiment of the invention, what is claimed as new and desired to be protected by Letters Patent includes the following:

## Claims

1. A system comprising:
a tractor including -
a chassis,
a plurality of ground-engaging elements supporting the chassis on a ground surface,
a propulsion system for driving at least one of the ground-engaging elements to propel the tractor along the ground surface, and
an automated guidance system comprising -
a location determining component for determining a geographic location of the tractor,
one or more steering actuators for steering the tractor, and
a controller for using location information from the location determining component and guidance path information to control the one or more steering actuators to automatically steer the tractor to follow a guidance path; and
one or more computing devices for -
receiving image data, the image data including a graphic depiction of an agricultural area including windrows of agricultural material within the agricultural area,
determining geographic locations of the plurality of windrows of agricultural material in the agricultural area from the image data, and
using the locations of the plurality of windrows of agricultural material, defining one or more guidance paths for an agricultural operation to be performed on the windrows of the agricultural material,
the controller of the automated guidance system configured to use the location information from the location determining component and the one or more guidance paths for the agricultural operation generated by the one or more computing devices to automatically steer the tractor to follow the one or more guidance paths for the agricultural operation.

2. The system as set forth in claim 1, the one or more computing devices further configured to -
identify a first group of windrows in a headland portion of the agricultural area,
identify a second group of windrows in a non-headland portion of the agricultural area, and
use only the location information of the windrows that are in the non-headland portion of the agricultural area to define the one or more guidance paths for the agricultural operation.

3. The system as set forth in claim 1, the one or more guidance paths being defined to optimize the baling operation.

4. The system as set forth in claim 3, the one or more guidance paths being defined to optimize the baling operation by minimizing a baling time of the baling operation.

5. The system as set forth in claim 3, the one or more guidance paths being defined to optimize the baling operation by minimizing a travel distance of the baling operation.

6. The system of claim 1, further comprising an unmanned aerial vehicle including a camera, the unmanned aerial vehicle being configured to fly over the agricultural area and use the camera to generate the image data used by the one or more computing devices to determine the geographic locations of the plurality of windrows of agricultural material in the agricultural area.

7. The system as set forth in claim 6, the one or more computing devices being further configured to combine two or more of the images captured by the camera to generate the image data.

8. The system of claim 1, further comprising a harvester configured to harvest a crop in the agricultural area and create the windrows of agricultural material within the agricultural area, the harvester including -
a location determining component for determining a geographic location of the harvester,
a camera for capturing a plurality of images of the agricultural area within the vicinity of the harvester as the harvester travels through the agricultural area during a harvesting operation, and
a controller configured to - u
se geographic location information from the location determining component of the harvester to assign geographic locations to one or more of the plurality of images captured by the camera, and
combine two or more of the images captured by the camera to create the image data used by the one or more computing devices.

9. A method comprising -
creating image data, the image data including an image of an agricultural area, the image including graphical representations of a plurality of windrows of agricultural material located within the agricultural area;
determining geographic locations of the plurality of windrows of agricultural material in the agricultural area from the image data;
defining one or more travel paths for a baling operation to bale the windrows of the agricultural material using the locations of the plurality of windrows of agricultural material; and
automatically steering a tractor during the baling operation to follow the one or more travel paths.

10. The method of claim 9, further comprising -
identifying a first group of windrows in a headland portion of the agricultural area from the image data,
identifying a second group of windrows in a non-headland portion of the agricultural area from the image data,
using only the location information of the windrows that are in the non-headland portion of the agricultural area to define the one or more guidance paths for the agricultural operation.

11. The method of claim 9, further comprising defining the one or more guidance paths to optimize the baling operation.

12. The method of claim 11, further comprising defining the one or more guidance paths to optimize the baling operation by minimizing a baling time of the baling operation.

13. The method of claim 11, further comprising defining the one or more guidance paths to optimize the baling operation by minimizing a travel distance of the baling operation.

14. The method of claim 9, further comprising using an unmanned aerial vehicle to create the image, the unmanned aerial vehicle including a camera and being configured to fly over the agricultural area and use the camera to generate the image data.

15. The method of claim 14, further comprising combining two or more of the images captured by the camera to generate the image data.

16. The method of claim 1, further comprising-
creating the image data using a harvester configured to harvest a crop in the agricultural area and to create the windrows of agricultural material within the agricultural area, the harvester including-
a location determining component for determining a geographic location of the harvester,
a camera for capturing a plurality of images of the agricultural area within the vicinity of the harvester as the harvester travels through the agricultural area during a harvesting operation, and
a controller configured to -
use geographic location information from the location determining component of the harvester to assign geographic locations to one or more of the plurality of images captured by the camera, and
combine two or more of the images captured by the camera to create the image data used by the one or more computing devices.
